(19) Europäisches Patentamt
European Patent Office
Office européen des brevets

(11) Publication number: **0 043 660**
**B1**

(12) **EUROPEAN PATENT SPECIFICATION**

(45) Date of publication of patent specification: **23.04.86**

(51) Int. Cl.⁴: **B 60 K 41/02**

(21) Application number: **81302740.6**

(22) Date of filing: **18.06.81**

(54) **Clutch control system.**

(30) Priority: **08.07.80 GB 8022348**

(43) Date of publication of application:
**13.01.82 Bulletin 82/02**

(45) Publication of the grant of the patent:
**23.04.86 Bulletin 86/17**

(84) Designated Contracting States:
**DE FR GB IT**

(56) References cited:
**EP-A-0 003 592**
**FR-A-1 480 556**
**US-A-4 081 065**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Windsor, Harry Mellows**
**5 Park Lane**
**Harbury Leamington Spa Warwickshire (GB)**

**EP 0 043 660 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to clutch control systems for the automatic control of the engagement of a motor vehicle friction clutch driven plate with a driving member on take up from a standing start.

US—A—4081065 discloses a clutch control system for the automatic control of the engagement of a motor vehicle friction clutch driven plate with a driving member on take up from a standing start. The known system comprises an engine speed sensor which produces a signal indicative of engine speed, a throttle position sensor which produces a signal indicative of throttle opening, logic circuitry that receives the said signals and produces a clutch operating signal and a clutch position control which is operated by the clutch operating signal, the throttle position signal being combined with the engine speed signal for derivation of the clutch operating signal. In this prior art, once the clutch has become fully engaged, the control system is rendered inoperative so that even when a large throttle opening is produced when the engine speed is low, the control system does not partially disengage the clutch to provide clutch slip and the higher engine speed which would be appropriate according to the control system for the throttle opening.

However, a problem can still arise immediately after starting from rest when the clutch has become engaged sufficiently to prevent clutch slip but before the clutch position control has moved to its fully engaged state if the throttle is then opened further. The increased throttle opening would result in partial clutch disengagement to cause clutch slip allowing the engine speed to rise. This clutch slip is undesirable and can lead to premature clutch wear. An object of the present invention is to provide a clutch control system which overcomes this problem.

In accordance with the present invention there is provided a vehicle transmission clutch electronic control system comprising an engine speed sensor which produces an engine speed signal indicative of engine speed, a throttle position sensor which produces a signal indicative of throttle opening, logic circuitry that receives the said signals and produces a clutch operating signal, and a clutch position control which is operated by the clutch operating signal, the throttle position signal being combined with the engine speed signal to form a modified engine speed signal for derivation of the clutch operating signal (see US—A—4081065) characterised in that the modified engine speed signal is compared with a constant reference signal in derivation of the clutch operating signal in the form of an error signal between the compared signals to control engine speed to a constant level for a given throttle position during clutch take up and in that an inhibitor is provided to prevent partial clutch disengagement which would lead to clutch slip, after the modified engine speed signal has exceeded the reference signal to indicate termination of clutch slip, the inhibitor preventing an increase in throttle opening from altering the error signal in a direction to cause a requirement for a partial clutch disengagement which would allow an increase in engine speed commensurate with the increased throttle opening.

Preferably the inhibitor comprises a comparator trigger circuit responsive to a difference between the modified engine speed signal and the reference signal indicative that clutch slip has ceased.

The invention will be described by way of example and with reference to the following drawings in which:—

Fig. 1 is a schematic drawing of a clutch control system according to this invention;

Fig. 2 is a detailed circuit of an engine speed sensor as is used in Fig. 1;

Fig. 3 is a detailed circuit of a limiter and trigger circuit as utilised in Fig. 1;

Fig. 4 is a detailed circuit of a phase gain shaping network utilised in Fig. 1;

Fig. 5 is a detailed circuit of the oscillator of Fig. 1;

Fig. 6 is a detailed circuit of the mark space ratio modulator of Fig. 1;

Fig. 7 is the output as used in Fig. 1; and

Fig. 8 is a graph of engine torque vs. engine speed.

The motor vehicle engine speed is sensed by an engine speed sensor 11 that produces a voltage $V_1$ constituting an engine speed signal proportional to engine speed. The detailed circuit of the sensor is shown in Fig. 3 and is basically a magnetic probe sensing the teeth on the engine fly-wheel and a transistor pump. The sensor is connected to a comparator 13 which also receives a reference signal $V_R$ from a reference signal generator 14. This can be, for example, a potentiometer across the vehicle battery so that the reference voltage is the same as a signal obtained from the sensor 11 at a particular engine speed e.g. 1000 r.p.m.

A throttle position transducer 15 in the form of a variable potentiometer produces a throttle position signal $V_T$ representative of throttle opening. The signal $V_T$ is made proportional to throttle closure i.e. at light throttle openings the signal is at a maximum and at full throttle openings the signal $V_T$ has a minimum value. This relationship can be written as $V_T$=k (1-throttle opening). This inverse relationship between the signal $V_T$ and the throttle opening is utilised because the signal $V_T$ is required in this form to control other functions in the vehicle gearbox. The throttle position transducer 15 is connected to a limiter 28, the action of which is to allow the signal $V_T$ to vary only over a limited range say 10%—50% of throttle opening. The limiter 28 is shown in detail in Fig. 3. The signal $V_T$ is fed into the engine speed signal $V_1$ to from a modified engine speed signal $V_1^1$.

Logic circuitry in the form of comparator 13 receives the modified reference signal $V_1^1$ for comparison with the reference signal $V_R$ and

produces an error signal E which is fed into a clutch position control which controls the operation of an actuator 137. Error signal E thus constitutes a clutch operating signal. The actuator 137 operates the vehicle clutch 131 and is powered by hydraulic pressure but could alternatively be pneumatic or electrical.

The clutch position control comprises a comparator 130 that receives the error signal E and a feed back signal $V_P$ from a travel transducer 132 responsive to the position of the clutch. The feed back signal $V_P$ is representative of the position of the clutch. The signal derived from the comparator 130 is fed into a phase gain shaping network 133, a mark space ratio modulator and oscillator 134 and 135, respectively, and is then utilised via output 138 to control a solenoid operated hydraulic valve 136. The hydraulic valve 136 controls hydraulic flow through the hydraulic actuator 137. The mark/space ratio of the signal fed into the solenoid valve 136 determines the hydraulic flow into the actuator and hence the rate of engagement of the clutch driven plate with its driving member. The shaping network 133, oscillator 135, mark/space ratio 134 modulation network and output 138 are shown in detail in Figs. 4—7 respectively.

The actuator 137 operates so as to equalise the feed back signal $V_P$ with the error signal E. Consequently the actuator 137 takes up a position dictated by the error signal E and which is proportional to the value of the error signal E.

A comparator trigger circuit 23 is connected between the reference signal $V_R$ and the modified engine speed signal $V_1^1$. The trigger circuit actuates when $(V_1+V_T)>V_R$ and it modifies the throttle signal $V_T$ with an output signal $V_X$ as described hereinafter.

The clutch position control operates the actuator 137 during clutch take up to vary the state of engagement of the clutch driven plate with driving member on the vehicle engine (not shown) and thereby alter the engine speed to cause the modified engine speed signal $V_1^1$ to approach equivalence with the reference signal $V_R$ and make the error signal E approach zero, when the signal $V_1^1$ is lower than the reference signal $V_R$ the clutch is disengaged, and when the signal $V_1^1$ exceeds $V_R$ the error signal changes its polarity and the clutch loads the vehicle engine to cause the engine speed to decrease and make $V_1^1=V_R$ at which point the error signal tends to approach zero.

Hence for a given throttle opening during clutch take up the clutch engagement will arrive at the condition where $V_1^1=V_R$. Once the clutch is fully engaged the engine speed can rise above the reference and the clutch control will hold the clutch fully engaged.

From a standing start with the vehicle engine idling $V_T$ is equal to some constant value, say 11 volts, and therefore, since $V_1$ is very low, $V_1^1$ is just less than $V_R$ and the clutch is fully disengaged. As the driver increases the throttle opening the engine speed increases and $V_1$ causes the signal $V_1^1$ to equalise $V_R$ to say 1000 r.p.m., the error signal E goes to zero, and the clutch control begins to engage the driven plate with vehicle engine driving member.

Now with the vehicle stationary, as the throttle is opened to make the vehicle move off $V_T$ gets smaller and hence the engine speed signal $V_1$ must be higher before the clutch begins to engage. This causes the engine speed to become higher before the clutch engages. Therefore if the vehicle is under load on a hill then the clutch will not engage until the engine has developed enough torque to accelerate the load. With reference to Fig. 8 the graph shows the torque output against engine speed curves for various throttle openings. The line A represents a fixed take up speed and the line B represents the take up speed being variable with throttle opening, therefore allowing greater torque output from the engine at the clutch engagement.

On vehicle take-off, initially when the clutch is disengaged the modified signal $V_1^1$ is below the reference signal $V_R$ so that the trigger circuit 23 receives a low input signal and the trigger circuit is dormant and is isolated from the throttle signal $V_T$ by a diode 33. When the clutch slip ceases and $V_1^1$ exceeds $V_R$ the trigger circuit is energised and its output $V_X$ goes positive so that this pulls the throttle signal $V_T$ upto a value similar to that of a light throttle value. This is accomplished via diode 33. The effect of this is that if the engine load is increased (by further throttle opening) after synchronisation e.g. on a hill start, the clutch will not slip unless the engine speed drops below the engagement speed represented by the reference signal $V_R$. The trigger circuit 23 thus serves as an inhibitor to prevent partial clutch disengagement which would lead to clutch slip.

**Claims**

1. A vehicle transmission clutch electronic control system comprising an engine speed sensor (11) which produces an engine speed signal $(V_1)$ indicative of engine speed, a throttle position sensor (15) which produces a signal $(V_T)$ indicative of throttle opening, logic circuitry (13) that receives the said signals and produces a clutch operating signal (E), and a clutch position control (130, 132, 133, 134, 135, 136, 137, 138) which is operated by the clutch operating signal (E), the throttle position signal $(V_T)$ being combined with the engine speed signal $(V_1)$ to form a modified engine speed signal $(V_1^1)$ for derivation of the clutch operating signal characterised in that the modified engine speed signal $(V_1^1)$ is compared with a constant reference signal $(V_R)$ in derivation of the clutch operating signal (E) in the form of an error signal between the compared signals ($V_1^1$ and $V_R$) to control engine speed to a constant level for a given throttle position during clutch take up and in that an inhibitor (23) is provided to prevent partial clutch disengagement, which would lead to clutch slip, after the modified engine speed signal $(V_1^1)$ has exceeded the

reference signal ($V_R$) to indicate termination of clutch slip, the inhibitor (23) preventing an increase in throttle opening from altering the error signal in a direction to cause a requirement for a partial clutch disengagement which would allow an increase in engine speed commensurate with the increased throttle opening.

2. A control system as claimed in claim 1 characterised in that the inhibitor comprises a comparator trigger circuit (23) responsive to a difference between the modified engine speed signal ($V_1^1$) and the reference signal ($V_R$) indicative that clutch slip has ceased.

**Patentansprüche**

1. Elektronische Fahrzeuggetriebekupplungssteueranlage mit einem Motordrehzahlfühler (11), der ein die Motordrehzahl anzeigendes Motordrehzahlsignal ($V_1$) erzeugt, einem Drosselklappenstellungsfühler (15), der ein die Drosselöffnung anzeigendes Signal ($V_T$) erzeugt, einer Logikschaltung (13), die diese Signale empfängt und ein Kupplungsbetätigungssignal (E) erzeugt, und einer Kupplungsstellungssteuereinrichtung (130, 132, 133, 134, 135, 136, 137, 138), die durch das Kupplungsbetätigungssignal (E) betätigt wird, wobei das Drosselklappenstellungssignal ($V_T$) mit dem Motordrehzahlsignal ($V_1$) vereinigt wird, um ein modifiziertes Motordrehzahlsignal ($V_1^1$) zur Gewinnung des Kupplungsbetätigungssignals zu bilden, dadurch gekennzeichnet, daß das modifizierte Motordrehzahlsignal ($V_1^1$) mit einem konstanten Referenzsignal ($V_R$) verglichen wird, wobei das Kupplungsbetätigungssignal (E) in form eines Fehlersignals zwischen den verglichenen Signalen ($V_1^1$) und ($V_R$) gewonnen wird, um die Motordrehzahl auf einen konstanten Pegel für eine vorgegebene Drosselklappenstellung während des Einkuppelns einzusteuern, und daß ein Inhibitor (23) vorgesehen ist, um ein zum Schleifen der Kupplung führendes teilweises Ausrücken der Kupplung zu verhindern, nachdem das modifizierte Motordrehzahlsignal ($V_1^1$) größer als das Referenzsignal ($V_R$) geworden ist, um die Beendigung des Schleifens der Kupplung anzuzeigen, wobei der Inhibitor (23) verhindert, daß eine Vergrößerung der Drosselöffnung des Fehlersignal in einer Richtung verändert, daß ein Bedarf an einem teilweisen Ausrücken der Kupplung entsteht, das eine mit der vergrößerten Drosselöffnung übereinstimmende Zunahme der Motordrehzahl zulassen würde.

2. Steueranlage nach Anspruch 1, dadurch gekennzeichnet, daß der Inhibitor eine Komparatortriggerschaltung (23) aufweist, die auf eine Differenz zwischen dem modifizierten Motordrehzahlsignal ($V_1^1$) und dem Referenzsignal ($V_R$) anspricht, die anzeigt, daß das Schleifen der Kupplung aufgehört hat.

**Revendications**

1. Système électronique de commande de l'embrayage pour transmission de véhicule, comprenant un capteur (11) de vitesse du moteur qui produit un signal ($V_1$) de vitesse du moteur indicatif de la vitesse du moteur, un capteur (15) de position du papillon des gaz, qui produit un signal ($V_T$) indicatif de l'ouverture du papillon des gaz, un circuit logique (13) qui reçoit lesdits signaux et produit un signal E d'actionnement de l'embrayage et une commande de position de l'embrayage (130, 132, 133, 134, 135, 136, 137, 138) qui est actionnée par le signal (E) d'actionnement de l'embrayage, le signal ($V_T$) de position du papillon des gaz étant combiné avec le signal ($V_1$) de vitesse du moteur pour former un signal modifié ($V_1^1$) de vitesse du moteur pour dériver le signal d'actionnement d'embrayage, caractérisé en ce que le signal modifié ($V_1^1$) de vitesse du moteur est comparé à un signal constant de référence ($V_R$) en dérivation du signal (E) d'actionnement de l'embrayage sous la forme d'un signal d'erreur entre les signaux comparés ($V_1^1$ et $V_R$) pour commander la vitesse du moteur à une valeur constante pour une position donnée du papillon des gaz pendant le serrage de l'embrayage et en ce qu'un circuit inhibiteur (23) est prévu pour empêcher en débrayage partiel, qui conduirait à un glissement de l'embrayage, après que le signal modifié ($V_1^1$) de vitesse du moteur ait excédé le signal de référence ($V_R$) pour indiquer la fin du glissement de l'embrayage, le circuit inhibiteur (23) empêchant une augmentation de l'ouverture du papillon des gaz de modifier le signal d'erreur dans le sens voulu pour provoquer un besoin de débrayage partiel de l'embrayage qui permettrait une augmentation de la vitesse du moteur proportionnée à l'ouverture accrue de papillon des gaz.

2. Système de commande suivant la revendication 1, caractérisé en ce que le circuit inhibiteur comprend un circuit déclencheur-comparateur (23) qui réagit à une différence entre le signal modifié ($V_1^1$) de vitesse du moteur et le signal de référence ($V_R$) indicatif du fait que le glissement de l'embrayage a cessé.

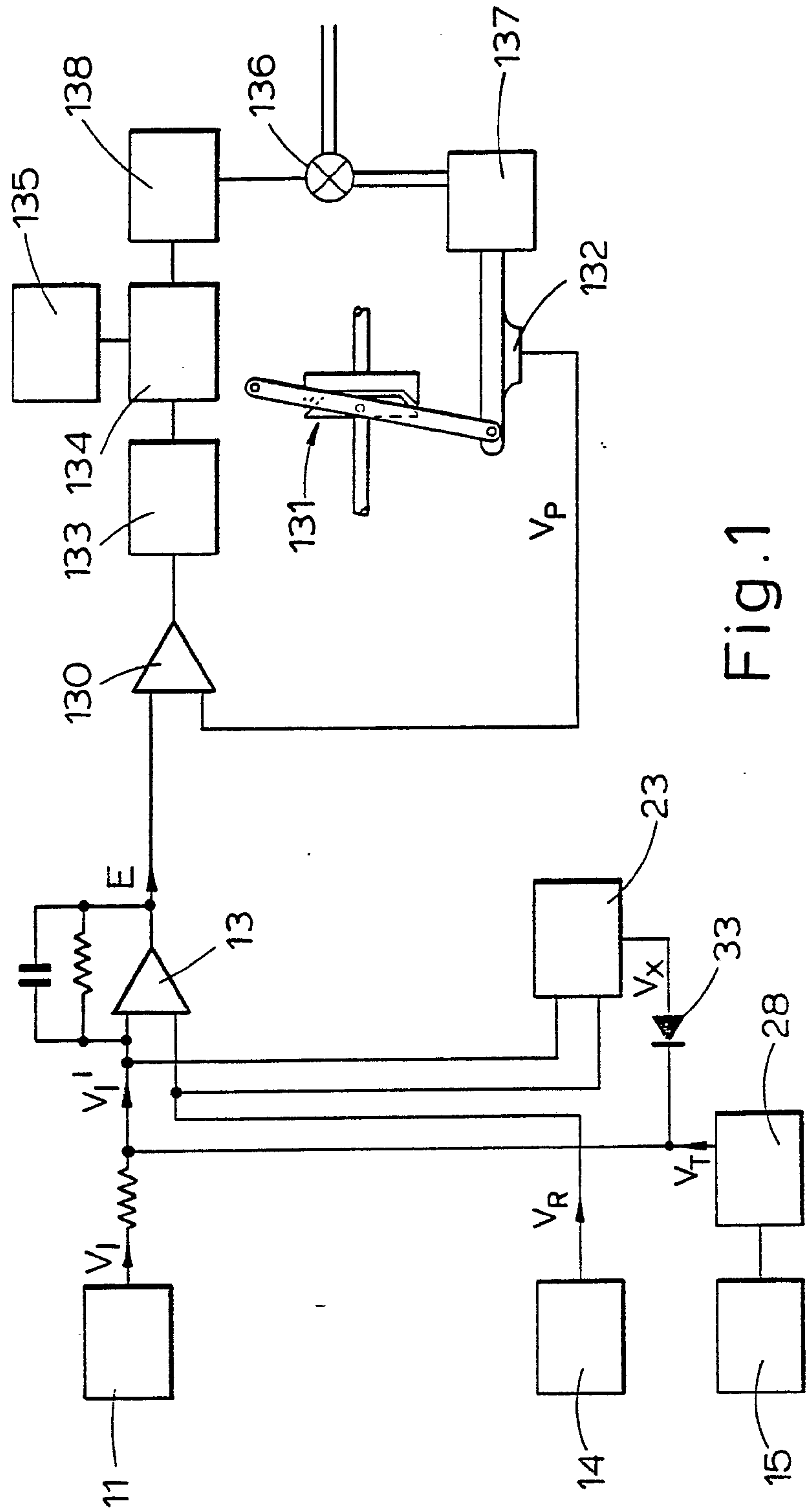
11
13
14
15
23
28
33
130
131
132
133
134
135
136
137
138
E
$V_I$
$V_I'$
$V_R$
$V_T$
$V_X$
$V_P$

Fig.1

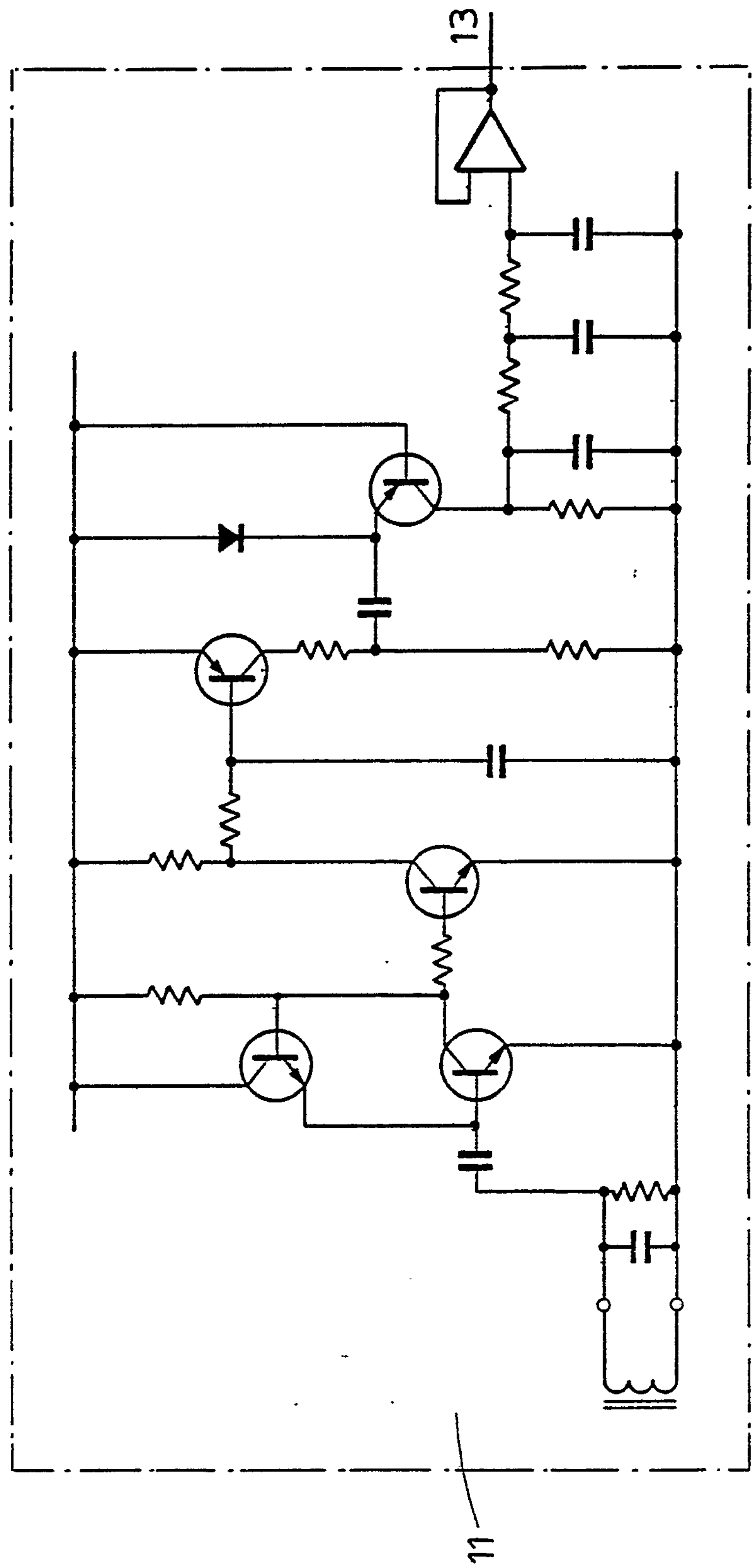


Fig.2

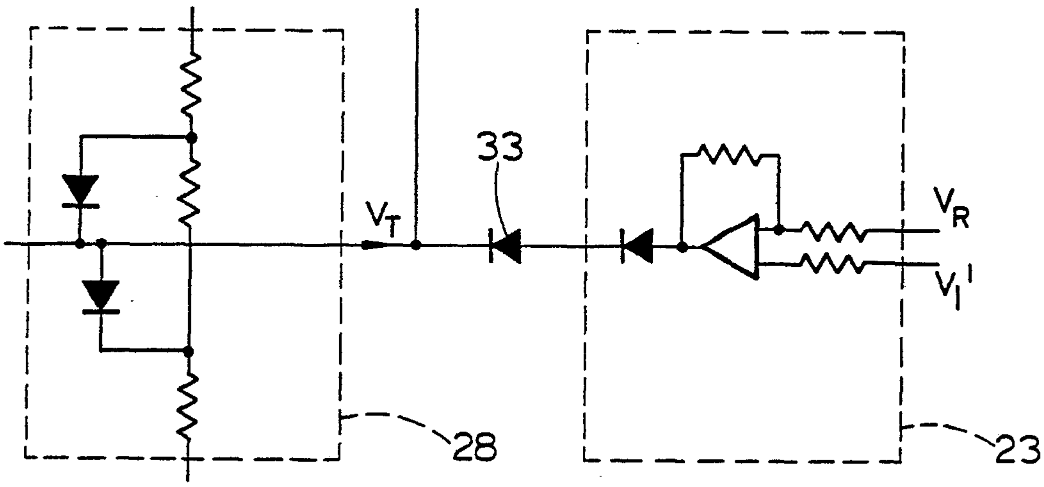


Fig. 3

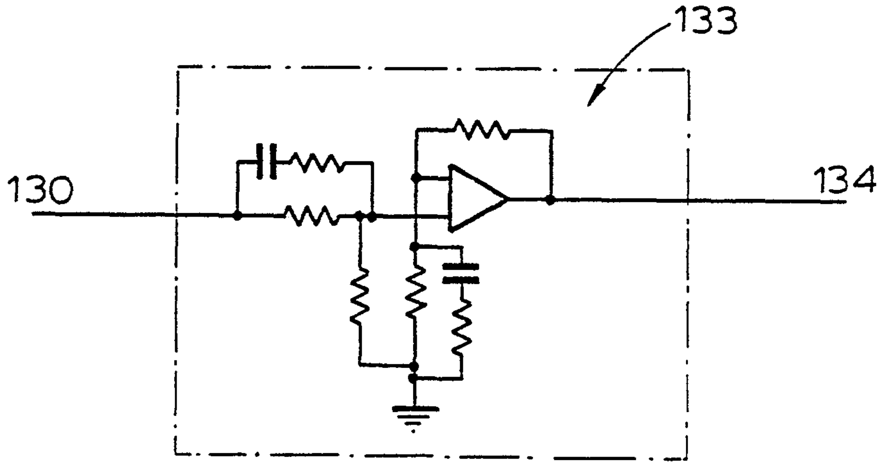


Fig.4

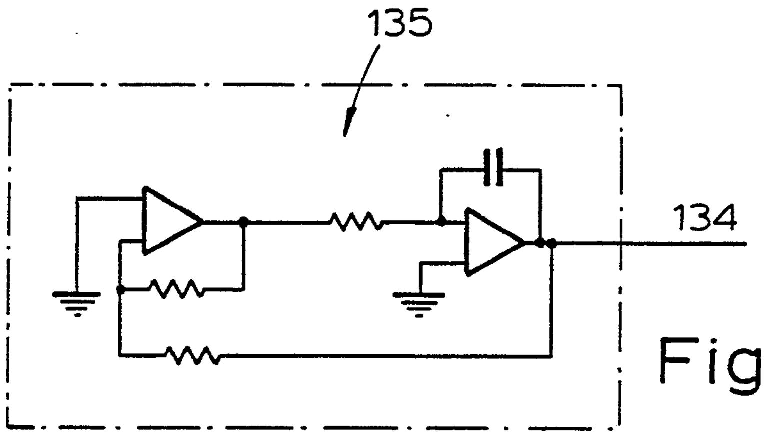


Fig.5

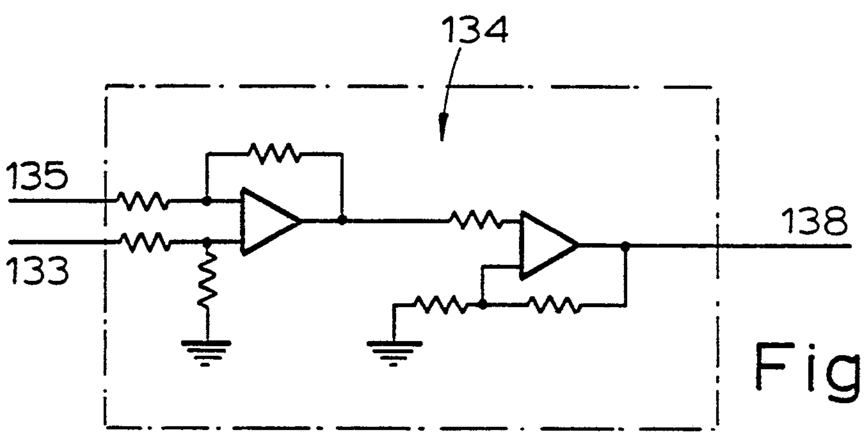


Fig.6

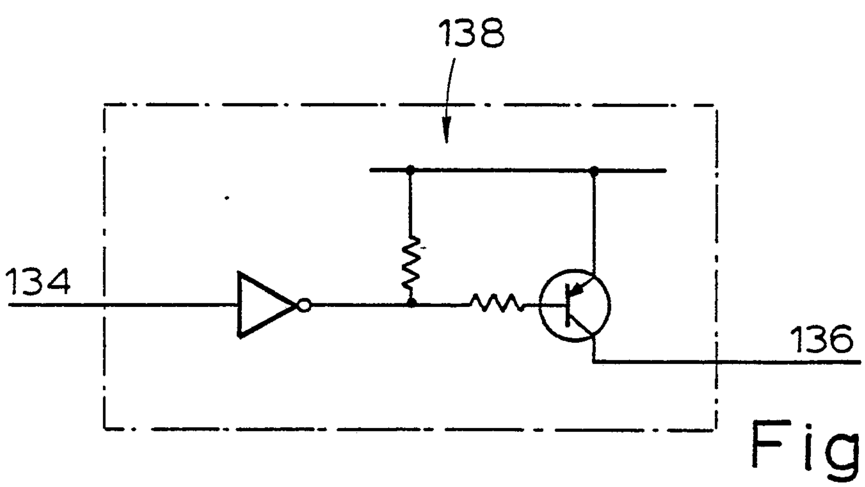


Fig.7

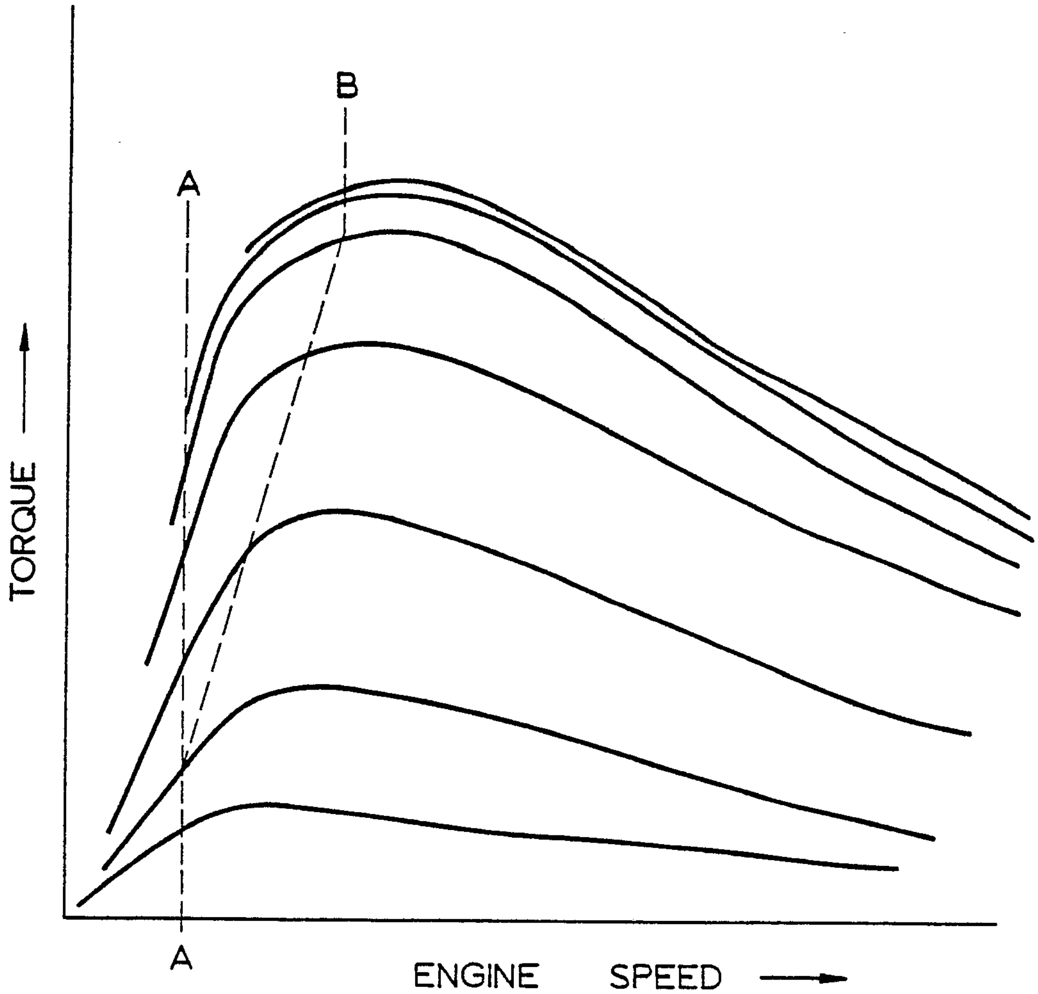


Fig. 8